# EUROPÄISCHE PATENTSCHRIFT

(11) **EP 2 280 198 B1**
(45) Veröffentlichungstag und Bekanntmachung des Hinweises auf die Patenterteilung: **19.09.2012**
(21) Anmeldenummer: 10170387.4
(22) Anmeldetag: 22.07.2010
(51) Int. Cl.: F16J 15/06, F16J 15/32, F15B 15/14, F16F 9/36

(54) **Verschlusseinheit für ein Kolben-Zylinderaggregat**
Closing unit for a piston cylinder device
Unité de fermeture pour un ensemble cylindre piston

(30) Priorität: 28.07.2009 DE 102009028047
(43) Veröffentlichungstag der Anmeldung: 02.02.2011
(73) Patentinhaber: ZF Friedrichshafen AG, 88038 Friedrichshafen (DE)
(72) Erfinder: Thein, Thomas, 97526, Sennfeld (DE); Breun, Wolfgang, 97464, Niederwerrn (DE); Asadi, Hassan, 97422, Schweinfurt (DE)

(56) Entgegenhaltungen:
- EP-A1- 0 104 504
- DE-A1- 10 042 031
- JP-U- 56 097 643
- US-A1- 2005 206 089

## Beschreibung

Die Erfindung betrifft eine Verschlusseinheit für ein Kolben-Zylinderaggregat gemäß dem Oberbegriff von Patentanspruch 1.

Die Verschlusseinheit für ein Koiben-Zylinderaggregat umfasst einen in der Regel metallischen Ringkörper, der mit mindestens einer Dichtung für eine aus einem Zylinderragende Stange bestückt ist. Die Dichtung ist mit dem Ringkörper fest verbunden und stützt sich dabei radial ab, um eine definierte Vorspannung auf der Oberfläche der Stange erreichen zu können. Ein grundsätzliches Problem besteht in der einfachen Befestigung der Dichtung an dem Ringkörper.

Ein häufig angewendetes Konstruktionsprinzip ist beispielsweise aus der DE 100 22 855 A1 bekannt. Dabei wird die Dichtung auf einen Träger aufvulkanisiert. Bei der Montage der Dichtung wird ein Randbereich des Zylinders auf eine axiale Stirnfläche des Ringkörpers gerollt, so dass die Dichtung zwischen dem umgebogenen Randbereich und dem Ringkörper verspannt ist. Metall-Kunststoff-Verbundteile sind prinzipiell relativ teuer.

Ein ähnliches Prinzip wird in der DE 34 43 370 C2 verfolgt. Die Dichtung wird außenseitig von einem Stützring verstärkt. Der Stützring wird in eine Ringnut des Ringkörpers der Verschlusseinheit gepresst.

Die DE 100 42 031 A1 beschreibt ein Bauprinzip einer Verschlusseinheit, bei der sämtliche Bauteile axial auf Absätzen des Ringkörpers aufliegen und durch eine Zwischenscheibe voneinander getrennt sind. Diese geschichtete Bauweise erleichtert die Montage und die Herstellung eines einfachen Ringkörpers, der keine Hinterschneidungen aufweist. Der Nachteil besteht in der relativ großen Teilezahl.

Aus der DE 10 2005 009 151 A1 ist ein Einrohrschwingungsdämpfer bekannt, dessen Verschlusseinheit eine Ringnut aufweist. Die Dichtung umfasst mindestens eine an der Stange anliegende Dichtlippe und einen Befestigungsring, der deckseitig in eine Ringnut des Ringkörpers eingelegt wird. Anschließend wird der Ringkörper im Bereich des Rand an der Ringnut zumindest partiell verstemmt, so dass die Dichtung durch die Volumenverschiebung am Ringkörper axial fixiert ist. Dabei besteht das Problem, dass der Werkstoff des Ringkörpers für die Verstemmung geeignet sein muss. Spröde Werkstoff scheiden demnach für den Ringkörper aus.

Die Aufgabe der vorliegenden Erfindung besteht darin, eine Verschlusseinheit für ein Kolben-Zylinderaggregat derart weiterzuentwickeln, so dass eine einfache Montage einer Dichtung für eine die Verschlusseinheit durchdringenden Stange möglich ist.

Die EP 0 104 504 A1 offenbart eine Verschlusseinheit mit einer Ringdichtung in einer Dichtungsnut, deren Nutseitenwände radial zur Längsachse einer Stange verlaufen. Auf einer äußeren Mantelfläche sind elastischen Dichtlippen ausgeführt, die mit einer Gegenfläche eines Gehäuses je nach Druckbelastung der Ringdichtung in Kontakt stehen oder von der Gegenfläche abgehoben sind. Axial gehalten wird die Ringdichtung von einem radial nach innen vorspringenden Kragen des Gehäuses.

Erfindungsgemäß wird die Aufgabe durch die Merkmale des Patentanspruchs 1 gelöst.

Diese Bauform vereinfacht wesentlich die Herstellung des Ringkörpers, insbesondere wenn der Ringkörper mittels eines Sinterverfahrens hergestellt ist. Der Volumenausgleichsraum ermöglicht die direkte Montage der Dichtung ohne einen formgebenden Stützring o. ä., da auch größere Toleranzschwankungen im Bereich des Befestigungsrings der Dichtung ausgeglichen werden.

So ist bevorzugt vorgesehen, dass der Volumenausgleichsraum durch eine in Umfangsrichtung partielle Durchmesserdifferenz zwischen dem Befestigungsring und der Ringnut gebildet wird.

Gemäß einem vorteilhaften Unteranspruch werden mehrere benachbarte Volumenausgleichsräume durch ein Wellenprofil an der Verschlusseinheit gebildet.

Bezüglich der Herstellbarkeit der Verschlusseinheit ist das Wellenprofil an der Dichtung ausgeführt. Die Ringnut im Ringkörper kann dadurch eine einfache Ringform aufweisen, die sich beliebig spanend oder sintertechnisch herstellen lässt.

Damit kein Schmutz oder Feuchtigkeit in die Ringnut für die Dichtung eindringen kann, ist das Wellenprofil im Bereich des Innendurchmessers des Befestigungsrings ausgeführt. Die Dichtung verschließt dabei deckseitig den mindestens einen Volumenausgleichsraum.

Wenn die Dichtung in die Ringnut gedrückt wird, dann könnte der Fall auftreten, dass dabei das Luftvolumen zwischen der Unterseite des Befestigungsrings und dem Grund der Ringnut von der Dichtung abgeschlossen wird. Um dieses Luftvolumen bei der Montage der Dichtung abzuführen, ist die Ringnut an mindestens einen Entlüftungsquerschnitt angeschlossen.

Um die Dichtung bei einer Axialbewegung besser abstützen zu können, weist die Dichtung eine Anschlagfläche zu axialen Positionierung am Ringkörper auf.

Der besagte mindestens eine Entlüftungsquerschnitt ist in der Dichtung ausgeführt, der ein kleiner Entlüftungsquerschnitt leichter spritztechnisch im Dichtring als im Ringkörper herstellbar ist.

Der mindestens eine Entlüftungsquerschnitt durchsetzt die Anschlagfläche der Dichtung, so dass das eventuell eingeschlossene Luftvolumen in Richtung der Dichtfläche entweichen kann.

Anhand der folgenden Figurenbeschreibung soll die Erfindung näher erläutert werden. Es zeigt:
- Fig. 1: Schnittdarstellung durch eine Verschlusseinheit
- Fig. 2: Schnittdarstellung der Dichtung
- Fig. 3: Ansicht auf die Dichtung

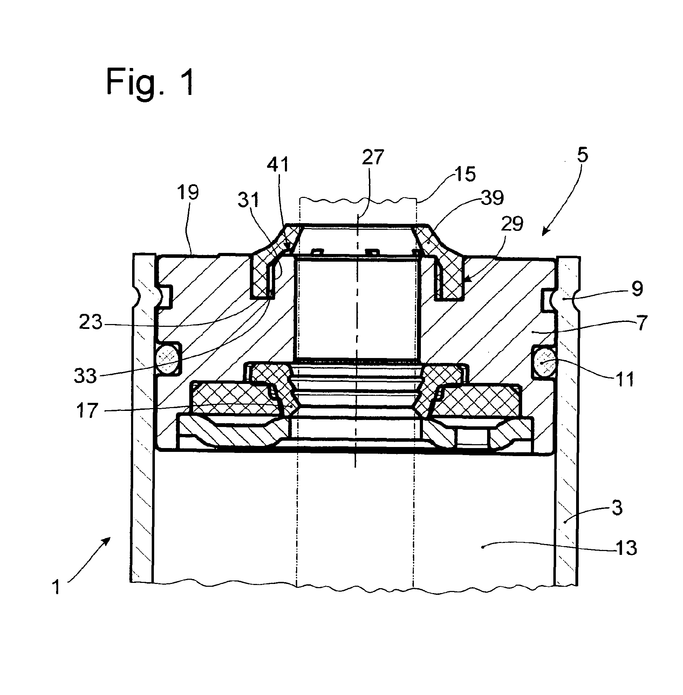

Die Fig. 1 beschränkt sich in ihrer Darstellung auf ein Ende eines Kolben-Zylinderaggregats 1, das in diesem Ausführungsbeispiel einen einfachen Zylinder 3 aufweist, der endseitig von einer Verschlusseinheit 5 abgedichtet wird. Die Verschlusseinheit umfasst einen Ringkörper 7, der häufig, aber nicht zwangsläufig aus einem metallischen Werkstoff besteht. Mittels mindestens einer Versickung 9, die auch auf Teilumfänge beschränkt sein kann, ist der Ringkörper 7 im Zylinder 3 fixiert. Gegen eine Leckage zwischen dem Zylinder 3 und dem Ringkörper 7 dient eine Ringdichtung 11.

Die Verschlusseinheit 5 verfügt über eine erste zu einem Arbeitsraum 13 weisende Dichtung 17, die eine Stange 15 abdichtet. Der Aufbau und die Wirkungsweise sind allgemein aus der Anwendung bei einem Einrohrschwingungsdämpfer bekannt und bedürfen deshalb keiner Erklärung.

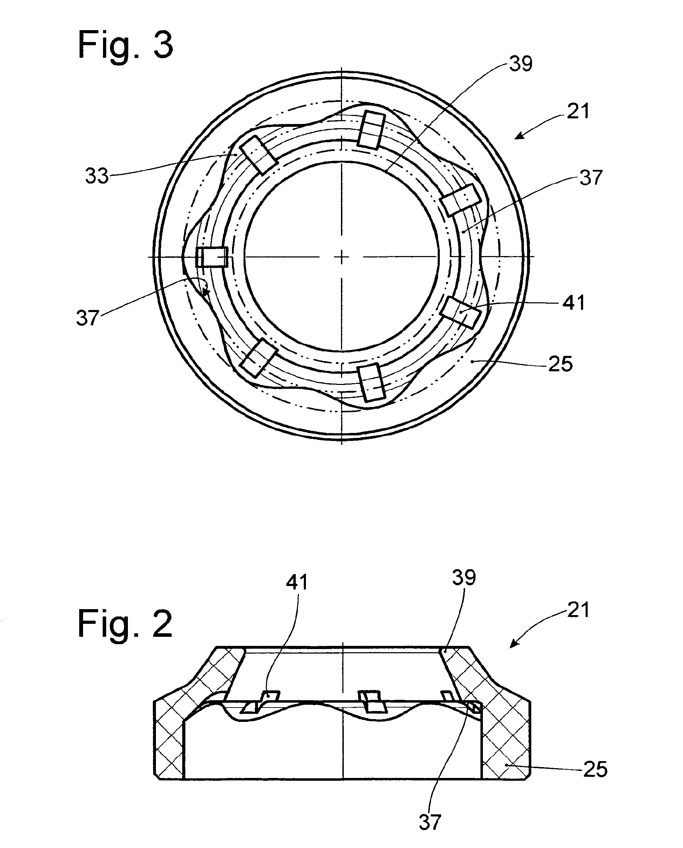

Auf einer äußeren Deckseite 19 der Verschlusseinheit ist eine zweite Dichtung 21 angeordnet. Diese Dichtung 21 übernimmt eine Abstreiferfunktion für die Stange 15. Die Dichtung 21 ist in einer Ringnut 23 des Ringkörpers 7 kraftschlüssig montiert, d. h. dass allein durch ein definierte radiales Übermaß eines Befestigungsrings 25, Fig. 2, als Teil der zweiten Dichtung 21 im Verhältnis zur radialen Breite der Ringnut 23 eine axiale Fixierung erreicht wird. Die Ringnut selbst weist parallel zur Längsachse 27 verlaufende Nutseitenflächen 29; 31 auf.

Zwischen dem Befestigungsring 25 und der Ringnut 23 liegt mindestens ein Volumenausgleichsraum 33 vor. Dieser Volumenausgleichsraum nimmt das bei der Montagebewegung der Dichtung 21 in die Ringnut 23 verformte Volumen des Befestigungsrings 25 auf.

Wie aus der Fig. 1 erkennbar ist, wird der Volumenausgleichsraum durch eine in Umfangsrichtung der Ringnut 23 partielle Durchmesserdifferenz zwischen der Dichtung bzw. dem Befestigungsring 25 und der Ringnut 23 gebildet. Aus der Zusammenschau der Fig. 2 und 3 ist erkennbar, dass der Befestigungsring 25 in Umfangsrichtung eine unterschiedliche Wandstärke aufweist, so dass ein Wellenprofil 35 entsteht. Dieses Wellenprofil 35 ist am Innendurchmesser des Befestigungsrings 25 ausgeführt.

In der Fig. 1 ist dargestellt, dass die Dichtung 21 eine Anschlagfläche 37 aufweist, die auf der Deckseite 19 des Ringkörpers 7 aufliegt und damit die axiale Position einer Dichtlippe 39 der Dichtung 21 zum Ringkörper 7 bestimmt.

Die Ringnut 23 ist an mindestens einen Entlüftungsquerschnitt 41 angeschlossen, so dass ein bei der Montage in der Ringnut 23 befindliches Luftvolumen in Richtung der Dichtlippe 39 abgeführt werden kann. Die Dichtlippe 39 ist in Grenzen radial elastisch ausgeführt, so das besagte Luftvolumen durch eine schon minimale Abhubbewegung der Dichtlippe 39 von der Stange 15 entweichen kann. Wie aus den Fig. 1 bis 3 ersichtlich ist, ist der mindestens eine Entlüftungsquerschnitt in der Dichtung 21 ausgeführt und durchsetzt dabei die Anschlagfläche 37.

Wenn die Dichtung 21 in ihrer vorbestimmten Einbaulage montiert ist, dann liegt eine Presspassung zwischen dem Befestigungsring 25 und der Ringnut 23 vor. Diese Presspassung hält die Dichtung 21 in der vorbestimmten Einbaulage, auch wenn die Stange eine Axialbewegung zur Verschlusseinheit 5 ausführt, da die Reibkraft zwischen dem Befestigungsring 25 und der Ringnut 23 um ein Vielfaches größer ist als die Reibkraft zwischen der Dichtlippe 39 und der Oberfläche der Stange 15.

### Bezugszeichenliste

- 1: Kolben-Zylinderaggregat
- 3: Zylinder
- 5: Verschlusseinheit
- 7: Ringkörper
- 9: Versickung
- 11: Ringdichtung
- 13: Arbeitsraum
- 15: Stange
- 17: Dichtung
- 19: Deckseite
- 21: zweite Dichtung
- 23: Ringnut
- 25: Befestigungsring
- 27: Längsachse
- 29; 31: Nutseitenflächen
- 33: Volumenausgleichsraum
- 35: Wellenprofil
- 37: Anschlagfläche
- 39: Dichtlippe
- 41: Entlüftungsquerschnitt

## Patentansprüche

1. Verschlusseinheit (5) für ein Kolben-Zylinderaggregat (1), umfassend einen Ringkörper (7) mit einer Durchgangsöffnung für eine den Ringkörper (7) durchdringende Stange (15), wobei eine ringförmige Dichtung (21) mit mindestens einer Dichtlippe (39) an der Stange (15) anliegt und mit einem Befestigungsring (25) in einer Ringnut (23) des Ringkörpers (7) fixiert ist,
**dadurch gekennzeichnet,**
**dass** die Ringnut parallel zu einer Längsachse (27) verlaufende Nutseitenflächen (29; 31) aufweist und der Befestigungsring (25) der Dichtung (21) kraftschlüssig in der Ringnut (23) des Ringkörpers (7) gehalten wird, wobei zwischen dem Befestigungsring (25) und der Ringnut (23) mindestens einen Volumenausgleichsraum (33) für den Befestigungsring (25) vorliegt.

2. Verschlusseinheit nach Anspruch 1,
**dadurch gekennzeichnet,**
**dass** der Volumenausgleichsraum (33) durch eine in Umfangsrichtung partielle Durchmesserdifferenz zwischen dem Befestigungsring (25) und der Ringnut (23) gebildet wird.

3. Verschlusseinheit nach Anspruch 1,
**dadurch gekennzeichnet,**
**dass** mehrere benachbarte Volumenausgleichsräume (33) durch ein Wellenprofil (35) an der Verschlusseinheit (5) gebildet werden.

4. Verschlusseinheit nach Anspruch 3,
**dadurch gekennzeichnet,**
**dass** das Wellenprofil (35) an der Dichtung (21) ausgeführt ist.

5. Verschlusseinheit nach Anspruch 4,
**dadurch gekennzeichnet,**
**dass** das Wellenprofil (35) im Bereich des Innendurchmessers des Befestigungsrings (25) ausgeführt ist.

6. Verschlusseinheit nach Anspruch 1,
**dadurch gekennzeichnet,**
**dass** die Ringnut (21) an mindestens einen Entlüftungsquerschnitt (41) angeschlossen ist.

7. Verschlusseinheit nach Anspruch 1,
**dadurch gekennzeichnet,**
**dass** die Dichtung (21) eine Anschlagfläche (37) zu axialen Positionierung am Ringkörper (7) aufweist.

8. Verschlusseinheit nach Anspruch 7,
**dadurch gekennzeichnet,**
**dass** der mindestens eine Entlüftungsquerschnitt (41) in der Dichtung (21) ausgeführt ist.

9. Verschlusseinheit nach Anspruch 8,
**dadurch gekennzeichnet,**
**dass** Entlüftungsquerschnitt (41) die Anschlagfläche (37) durchsetzt.

## Claims

1. Closure unit (5) for a piston-cylinder assembly (1), comprising an annular body (7) with a passage opening for a rod (15) which extends through the annular body (7), wherein an annular seal (21) bears with at least one sealing lip (39) against the rod (15) and is fixed with a fastening ring (25) in an annular groove (23) of the annular body (7) .
**characterized**
**in that** the annular groove has groove side surfaces (29; 31) running parallel to a longitudinal axis (27) and the fastening ring (25) of the seal (21) is held in a non-positively locking manner in the annular groove (23) of the annular body (7), wherein between the fastening ring (25) and the annular groove (23) there is provided at least one volume compensation chamber (33) for the fastening ring (25).

2. Closure unit according to Claim 1,
**characterized**
**in that** the volume compensation chamber (33) is formed by a circumferentially partial diameter difference between the fastening ring (25) and the annular groove (23).

3. Closure unit according to Claim 1,
**characterized**
**in that** a plurality of adjacent volume compensation chambers (33) is formed by an undulating profile (35) on the closure unit (5).

4. Closure unit according to Claim 3,
**characterized**
**in that** the undulating profile (35) is formed on the seal (21).

5. Closure unit according to Claim 4,
**characterized**
**in that** the undulating profile (35) is formed in the region of the inner diameter of the fastening ring (25).

6. Closure unit according to Claim 1,
**characterized**
**in that** the annular groove (23) is connected to at least one ventilation cross section (41).

7. Closure unit according to Claim 1,
**characterized**
**in that** the seal (21) has a stop surface (37) for axial positioning on the annular body (7).

8. Closure unit according to Claim 7,
**characterized**
**in that** the at least one ventilation cross section (41) is formed in the seal (21).

9. Closure unit according to Claim 8,
**characterized**
**in that** the ventilation cross section (41) extends through the stop surface (37).

## Revendications

1. Unité de fermeture (5) pour un ensemble cylindre-piston (1), comprenant un corps annulaire (7) avec une ouverture de passage pour une tige (15) traversant le corps annulaire (7), un joint d'étanchéité annulaire (21) ayant au moins une lèvre d'étanchéité (39) s'appliquant contre la tige (15) et étant fixé avec une bague de fixation (25) dans une rainure annulaire (23) du corps annulaire (7),
**caractérisée en ce que**
la rainure annulaire présente des surfaces latérales de rainure (29 ; 31) s'étendant parallèlement à un axe longitudinal (27) et la bague de fixation (25) du joint d'étanchéité (21) est maintenue par engagement par force dans la rainure annulaire (23) du corps annulaire (7), au moins un espace de compensation de volume (33) pour la bague de fixation (25) étant prévu entre la bague de fixation (25) et la rainure annulaire (23) .

2. Unité de fermeture selon la revendication 1,
**caractérisée en ce que**
l'espace de compensation de volume (33) est formé par une différence de diamètre partielle dans la direction périphérique entre la bague de fixation (25) et la rainure annulaire (23).

3. Unité de fermeture selon la revendication 1,
**caractérisée en ce que**
plusieurs espaces de compensation de volume adjacents (33) sont formés par un profil ondulé (35) sur l'unité de fermeture (5).

4. Unité de fermeture selon la revendication 3,
**caractérisée en ce que**
le profil ondulé (35) est réalisé sur le joint d'étanchéité (21) .

5. Unité de fermeture selon la revendication 4,
**caractérisée en ce que**
le profil ondulé (35) est réalisé dans la région du diamètre intérieur de la bague de fixation (25) .

6. Unité de fermeture selon la revendication 1,
**caractérisée en ce que**
la rainure annulaire (23) est raccordée à au moins une section transversale de ventilation (41).

7. Unité de fermeture selon la revendication 1,
**caractérisée en ce que**
le joint d'étanchéité (21) présente une surface de butée (37) pour le positionnement axial sur le corps annulaire (7).

8. Unité de fermeture selon la revendication 7,
**caractérisée en ce que**
l'au moins une section transversale de ventilation (41) est réalisée dans le joint d'étanchéité (21).

9. Unité de fermeture selon la revendication 8,
**caractérisée en ce que**
la section transversale de ventilation (41) traverse la surface de butée (37).
